# EUROPÄISCHE PATENTSCHRIFT

(11) **EP 2 048 556 B1**
(45) Veröffentlichungstag und Bekanntmachung des Hinweises auf die Patenterteilung: **24.11.2010**
(21) Anmeldenummer: 07019662.1
(22) Anmeldetag: 08.10.2007
(51) Int. Cl.: G05B 19/404

(54) **Verfahren zur Ermittlung von Kenngrössen einer angetriebenen nicht horizontal ausgerichteten Achse, insbesondere einer Werkzeugmaschine, sowie geeignete Anwendungen, korrespondierende Vorrichtungen und deren Verwendung**
Method for determining the characteristics of a non-horizontal driven shaft, in particular in a machine tool, as well as suitable applications, corresponding devices and their application
Procédé de détermination de valeurs caractéristiques d'un axe non horizontal et entraîné, en particulier d'une machine-outil, ainsi qu'applications appropriées, dispositifs correspondants et leur utilisation

(43) Veröffentlichungstag der Anmeldung: 15.04.2009
(73) Patentinhaber: SIEMENS AKTIENGESELLSCHAFT, 80333 München (DE)
(72) Erfinder: Haberl, Christian, 71272 Renningen (DE); Lehmann, Ewald, Dr., 75394 Oberreichenbach (DE); Ullrich, Joachim, Dr., 70563 Stuttgart (DE)

(56) Entgegenhaltungen:
- EP-A- 0 548 505
- EP-A- 0 997 801
- WO-A-2007/020181
- WO-A-2007/028850

## Beschreibung

Die Erfindung betrifft ein Verfahren zur Ermittlung zumindest einer Kenngröße einer angetriebenen nicht horizontal ausgerichteten Achse einer Maschine. Die Achse wird mittels einer rotierenden Antriebseinheit und/oder mittels einer linearen Antriebseinheit angetrieben. Es wird entlang eines vorgegebenen Verfahrweges der Achse ein auf die Antriebseinheit einwirkendes Drehmoment bzw. eine dazu korrespondierende Kraft gemessen.

Die Erfindung betrifft weiterhin geeignete Anwendungen des Verfahrens. Sie betrifft zudem eine geeignete Mess- und Auswerteeinheit zur Ermittlung zumindest einer derartigen Kenngröße sowie eine geeignete Verwendung einer derartigen Mess- und Auswerteeinheit. Schließlich betrifft die Erfindung ein Steuergerät zur Steuerung und Überwachung einer Maschine sowie eine Maschine, insbesondere eine Werkzeugmaschine, mit einem derartigen Steuergerät.

Aus dem Stand der Technik sind Verfahren zur Überwachung der Funktion einer Maschine, wie z.B. einer Werkzeugmaschine, allgemein bekannt. Die Überwachung erfolgt typischerweise auf Basis ermittelter Betriebsparameter oder geeigneter Kenngrößen. Bei Maschinen, welche eine oder mehrere Achsen aufweisen, sind insbesondere Kenngrößen zur Beschreibung der Achsenbewegung bekannt. Die Kenngrößen sind z.B. ein minimales, ein maximales oder ein mittleres Drehmoment. Diese rotatorischen Kenngrößen sind vorteilhaft, wenn der Antrieb der jeweiligen Maschinenachse durch eine rotierende Antriebseinheit erfolgt. Eine solche Antriebseinheit weist zumeist einen (rotierenden) Elektromotor auf, welcher über einen Spindeltrieb die entsprechende Achse der Maschine linear verfährt. Die Antriebseinheit kann darüber hinaus einen Umrichter umfassen, der dann den Elektromotor speist. Typischerweise werden die rotatorischen Kenngrößen in einem Gleichlauftest ermittelt. Hierzu wird das auf die Antriebseinheit wirkende Drehmoment bei einer vorgegebenen konstanten Verfahrgeschwindigkeit gemessen. Die so ermittelten Kenngrößen können dann auf eine Überschreitung oder auf eine Unterschreitung in Bezug auf einen Vergleichs- oder Grenzwert hin überwacht werden.

Im Falle einer horizontal angeordneten Achse entspricht das bei dem Gleichlauftest gemessene Drehmoment dem Reibmoment, welches von der Antriebseinheit zur Kompensation der Reibung der Achse aufgebracht werden muss. Überschreitet z.B. ein gemessenes mittleres Drehmoment, welches im vorliegenden Fall einem mittleren Reibmoment entspricht, einen Vergleichswert, so kann dies ein Hinweis auf eine überhöhte Reibung und folglich auf einen Verschleiß oder auf eine mangelnde Schmierung von Achsenkomponenten sein. Es kann dann eine entsprechende Warnmeldung automatisiert an einen Servicefachmann ausgegeben werden.

Ist die Antriebseinheit der Achse ein Linearantrieb mit einem Linearmotor, so kann die elektrische eingespeiste Energie in den Linearmotor direkt in eine lineare Verfahrbewegung der Achse umgesetzt werden. In diesem Fall sind translatorische Kenngrößen zur Beschreibung der Achsenbewegung vorteilhafter. Derartige Kenngrößen sind - analog zu den rotatorischen beispielhaften Kenngrößen - eine minimale, eine maximale oder eine mittlere Kraft.

Im Falle einer waagrecht angeordneten Achse ist es prinzipiell unerheblich, in welcher Richtung, das heißt in Vorwärtsrichtung oder Rückwärtsrichtung, das Drehmoment bzw. die Achskraft gemessen wird, da keine energieerhaltenden Kräfte oder Momente über die Achse auf die Antriebseinheit wirken. Allerdings können richtungsabhängige Störgrößen, wie z.B. Klemmstellen in der Führungsbahn der Achse, eine getrennte richtungsabhängige Ermittlung der Kenngrößen und somit eine getrennte Überwachung erforderlich machen.

Dokument WO 2007/020181 A1 offenbart die Ermittlung der Kenngröße von worsgrecht angeordneten Achsen einer Maschine.

Ist dagegen die jeweilige Achse nicht horizontal ausgerichtet, wie z.B. senkrecht oder schräg im Sinne einer Rampe, so wirkt die Gewichtskraft als wegunabhängige Kraft in nur einer Richtung. Derartige Achsen werden auch als "hängende" Achsen bezeichnet. Diese Kraft ist somit zum Verfahren der Achse in der einen Richtung höher und in der Gegenrichtung niedriger. Mit anderen Worten ist ein höheres Drehmoment erforderlich, wenn die Achse auf ein höheres energetisches Niveau verfahren werden soll. Im umgekehrten Fall ist das erforderliche Drehmoment kleiner. Es kann je nach Steigung der Achse auch negativ sein. In diesem Fall bremst die Antriebseinheit die Achse ab.

Dokument EP 0 548 505 A offenbart ein Verfahren und eine Vorrichtung zur Bestimmung der dynamischen Masse und der mittleren Reibkraft einer Aufzugstür, die auch für vertikale Schiebetüren geeignet sind. In diesem Dokument werden die dynamische Masse und die mittlere Reibkraft von in Vorwärts- und Rückwärtsrichtung gemessenen Positionen und Geschwindigkeiten ermittelt. Die Positionen und Geschwindigkeiten werden entlang von Teststrecken gemessen, die bei abgeschaltetem Türantrieb befahren werden.

Die jeweilige Achse kann auch mittels zweier oder mehrerer Antriebe verfahren werden, wobei die geregelten Antriebe untereinander gekoppelt sind. In diesem Fall spricht man von gekoppelten Antrieben. Hier kann der Fall auftreten, dass ein oder mehrere Antriebe teilweise "gegeneinander" arbeiten, wenn z.B. die Null- oder Referenzpunkte in den Messsystemen der Antriebe voneinander unterschiedlich sind. Die Antriebe können dabei über den gesamten Verfahrweg oder auch nur partiell sowie mit positionsabhängiger unterschiedlicher Kraft gegeneinander arbeiten. Beispielsweise können zwei Antriebe vorhanden sein, welche die Achse in gleicher Verfahrrichtung antreiben. Weist der zweite Antrieb im Vergleich zum ersten Antrieb ein etwas geringeres Moment bzw. eine etwas geringere Kraft auf, so wirkt der zweite Antrieb auf den ersten Antrieb bremsend bzw. antreibend. Für den gesamten Antrieb "scheint" es nun so, dass eine wegunabhängige Gewichtskraft im Sinne einer hängenden Achse wirken würde, und zwar unabhängig von der Einbaulage der Achse, das heißt horizontal, rampenförmig oder vertikal. Die nachfolgenden Betrachtungen umfassen somit auch solche Effekte, welche zumindest partiell wie eine Gewichtskraft auf die Achse einwirken.

Nachteilig daran ist, dass nun eine richtungsabhängige Erfassung und Überwachung der Drehmomente bzw. der Achskräfte erforderlich ist. Gemeinsame Grenzwerte sind für beide Richtungen folglich nicht brauchbar. Nachteilig ist auch, dass durch die überlagernde Wirkung der Gewichtskraft insbesondere eine Überwachung der betragsmäßig vergleichsweise kleinen reibungsabhängigen Kenngrößen erst gar nicht möglich bzw. vergleichsweise ungenau ist.

Aus dem Stand der Technik sind weiterhin hängende Achsen mit elastischem Gewichtsausgleich auf Basis einer elastischen Kraft bekannt. Die elastische Kraft kann beispielsweise auf hydraulischem, pneumatischem Wege oder mittels Federkraft erzeugt werden. Allerdings kann dieser Gewichtsausgleich die Wirkung der Gewichtskraft nicht über dem gesamten Verfahrweg kompensieren. In Teilen des Verfahrweges zeigt sich folglich eine elastische Störkraft, die sich so dargestellt, dass das benötige Drehmoment bzw. die benötigte Kraft in der einen Richtung linear mit dem Weg zunimmt, während sie in der entgegengesetzten Richtung linear abnimmt.

Der elastische Gewichtsausgleich ermöglicht es, dass sich die mittleren Drehmomentwerte bzw. Kraftwerte für beide Bewegungsrichtungen in etwa angleichen. Allerdings sind die Minimal- und Maximalwerte durch die Größe der üblicherweise nicht über den Weg linear verlaufenden elastischen Kraft bestimmt. Diese Kenngrößen können nachteilig nicht zur Überwachung der Leichtgängigkeit und des Verschleißes der jeweiligen Achse der Maschine herangezogen werden. Zugleich ist eine Überwachung insbesondere von auftretenden Störkräften während des Betriebes kaum möglich.

Ausgehend von dem eingangs genannten Stand der Technik ist es eine Aufgabe der Erfindung ein Verfahren anzugeben, welches die zuvor genannten Probleme behebt.

Es ist eine weitere Aufgabe der Erfindung, eine zum Verfahren korrespondierende Mess- und Auswerteeinheit, ein Steuergerät mit einer derartigen Mess- und Auswerteeinheit sowie eine Maschine mit einem derartigen Steuergerät anzugeben.

Die Aufgabe der Erfindung wird mit den Merkmalen des Patentanspruchs 1 gelöst. Vorteilhafte Verfahrensvarianten sind in den abhängigen Ansprüchen 2 bis 8 genannt. In den Ansprüchen 9 und 10 sind geeignete Anwendungen des Verfahrens angegeben. Im unabhängigen Anspruch 11 ist eine Mess- und Auswerteeinheit zur Ermittlung zumindest einer Kenngröße zumindest einer insbesondere hängenden angetriebenen Achse einer Maschine, insbesondere einer Werkzeugmaschine, genannt. In den Ansprüchen 12 bis 17 sind vorteilhafte Ausführungsformen der Mess- und Auswerteeinheit angegeben. Im Anspruch 18 ist eine geeignete Verwendung einer derartigen Mess- und Auswerteeinheit genannt. Im Anspruch 19 ist ein Steuergerät zur Steuerung und Überwachung einer Maschine angegeben, welche eine derartige Mess- und Auswerteeinheit aufweist. Im Anspruch 20 ist eine Maschine, insbesondere eine Werkzeugmaschine, genannt, welche ein derartiges Steuergerät aufweist. In den Ansprüchen 21 und 22 sind vorteilhafte Ausführungsformen der Maschine angegeben.

Erfindungsgemäß wird das Drehmoment bzw. die Kraft in Vorwärts- und Rückwärtsrichtung gemessen. Es werden energieerhaltende Momente bzw. energieerhaltende Kräfte einerseits und/oder reibungsabhängige Momente bzw. reibungsabhängige Kräfte andererseits durch rechnerische Überlagerung von zugehörigen Drehmoment- oder Kraftwerten als die zumindest eine richtungsunabhängige Kenngröße ermittelt.

Die erfindungsgemäße Trennung der erfassten Drehmomente bzw. Kräfte in verlustbehaftete und in energiespeichernde Kenngrößen ermöglicht vorteilhaft eine genauere Überwachungsmöglichkeit. Insbesondere ist eine genauere Überwachung von Maschinenkomponenten möglich, die überwiegend reibungsbehafteter Natur oder energiespeichernder Natur sind. Ein weiterer Vorteil ist die Richtungsunabhängigkeit der neuen Kenngrößen. Eine richtungsabhängige Überwachung mit jeweils unterschiedlichen Vergleich- oder Grenzwerten ist folglich nicht mehr erforderlich. Darüber hinaus erlaubt die erfindungsgemäße Aufteilung eine genauere Überwachung der typischerweise betragsmäßig kleineren reibungsabhängigen Kenngrößen.

Ein energieerhaltendes Moment ist z.B. dasjenige Moment, welches eine über die Achse auf die Antriebseinheit einwirkende Gewichtskraft kompensiert. In entsprechender Weise ist eine energieerhaltende Kraft diejenige Kraft, welche die auf die lineare Antriebseinheit einwirkende Gewichtskraft kompensiert. Dabei ist deren richtungsabhängige Wirkung auf die Antriebseinheit umso größer, je steiler die Achse verläuft.

Insbesondere ist das energieerhaltende Moment dasjenige Moment, welches zudem eine über die Achse auf die Antriebseinheit einwirkende elastische Kraft kompensiert. In entsprechender Weise ist eine energieerhaltende Kraft diejenige Kraft, welche zudem eine korrespondierende einwirkende elastische Kraft kompensiert. Das elastische Moment bzw. die elastische Kraft kann beispielsweise von einem pneumatischen Pufferspeicher stammen, welcher in Abhängigkeit des Verfahrweges der Achse komprimiert bzw. dekomprimiert wird.

Nach einer Ausführungsform wird das Drehmoment bzw. die Kraft bei einer vorgegebenen konstanten Verfahrgeschwindigkeit in Vorwärts- und Rückwärtsrichtung gemessen. Dadurch wird ein messtechnischer Einfluss von Trägheitskräften und geschwindigkeitsabhängigen Reibungskräften auf die Messung verhindert. Die Messung erfolgt vorzugsweise bei der Inbetriebnahme oder beim Einstellen bzw. beim Kalibrieren der Maschine.

Alternativ oder zusätzlich kann zu dem Drehmoment die jeweilige zugehörige Verfahrgeschwindigkeit in Vorwärts- und Rückwärtsrichtung gemessen werden. Es können dann die energieerhaltenden Momente und/oder die reibungsabhängigen Momente durch rechnerische Überlagerung der Drehmomentwerte unter rechnerischer Berücksichtigung zugehöriger beschleunigungsabhängiger Trägheitskräfte und geschwindigkeitsabhängiger Reibkräfte ermittelt werden. Die korrespondierenden energieerhaltenden und/oder reibungsabhängigen Kräfte können in analoger Weise ermittelt werden.

Diese Verfahrensvariante erfordert im Vergleich zur vorherigen Verfahrensvariante einen größeren mess- und rechentechnischen Aufwand. Jedoch erlaubt diese vorteilhaft die Ermittlung der neuen richtungsunabhängigen Kenngrößen im laufenden Betrieb der Maschine. Mittels dieser Verfahrensvariante ist sozusagen eine Normierung der neuen Kenngrößen mit Hilfe entsprechender geschwindigkeits- und richtungsabhängiger Gewichtung der erfassten Drehmoment- oder Kraftwerte möglich.

Einer weiteren Ausführungsform zufolge werden die Drehmoment- bzw. Kraftwerte in Abhängigkeit des Verfahrweges der Achse gemessen. Die Wegerfassung kann mittels eines separaten Wegaufnehmers im Bereich des Verfahrweges erfolgen. Sie kann z.B. alternativ über einen am Elektromotor angebrachten Drehgeber ermittelt werden.

Nach einer vorteilhaften Ausführungsform wird die zumindest eine rechnerisch ermittelte Kenngröße mit einem jeweiligen Vergleichswert verglichen. Es wird im Falle einer unzulässigen Abweichung vom Vergleichswert eine Warnmeldung ausgegeben. Der Vergleichswert kann z.B. ein oberer und/oder unterer Grenzwert sein. Beispielsweise kann das rechnerisch ermittelte Reibmoment mit einem oberen Grenzwert verglichen werden, welcher einen zu hohen Verschleiß der Achse der Maschine anzeigt.

Insbesondere ist eine rechnerisch ermittelte, energieerhaltende und richtungsunabhängige Kenngröße ein Momentenoffset, ein maximales erhaltendes Moment, ein minimales erhaltendes Moment oder ein Momententrend der elastischen Kraft. In analoger translatorischer Hinsicht ist diese Kenngröße ein Kraftoffset, eine maximale erhaltende Kraft, eine minimale erhaltende Kraft oder ein Krafttrend der elastischen Kraft.

Der Momenten- bzw. Kraftoffset wird dadurch gebildet, indem der Mittelwert aller Drehmoment- bzw. Kraftwerte jeweils für die Vorwärtsrichtung sowie für die Rückwärtsrichtung der Achse und über den gesamten Verfahrweg der Achse vorzugsweise bei konstanter Geschwindigkeit gebildet wird. Der Momenten- bzw. Kraftoffset wird aus dem Mittelwert aus der mittleren Kraft in Vorwärts- und Rückwärtsrichtung, das heißt auf- und abwärts, gebildet. Er beschreibt das mittlere Drehmoment bzw. die mittlere Kraft, welches bzw. welche benötigt wird, um eine konstante äußere Kraft, wie z.B. die Gewichtskraft, zu kompensieren.

Das maximale erhaltende Moment wird dadurch gebildet, indem für jede Position des Verfahrweges die Hälfte des Mittelwertes des Drehmomentes in Vorwärts- und Rückwärtsrichtung berechnet und daraus das absolute Maximum gebildet wird. Das maximale erhaltende Moment beschreibt das Drehmoment, welches das maximale energieerhaltende Drehmoment kompensiert. In entsprechender Weise erfolgt die Ermittlung der maximalen erhaltenden Kraft auf Basis korrespondierender Kraftwerte.

Das minimale erhaltende Moment wird dadurch gebildet, indem für jede Position des Verfahrweges die Hälfte des Mittelwertes des Drehmomentes in Vorwärts- und Rückwärtsrichtung berechnet und daraus das absolute Minimum gebildet wird. Das minimale erhaltende Moment beschreibt das Drehmoment, welches das minimale energieerhaltende Drehmoment kompensiert. In entsprechender Weise erfolgt die Ermittlung der minimalen erhaltenden Kraft auf Basis korrespondierender Kraftwerte.

In Fällen, in denen das Drehmoment bzw. die Kraft sich in etwa linear mit dem Verfahrweg ändert, ist vorteilhaft eine Aufteilung des herkömmlichen linearen Trends in einen reibwertabhängigen Trend und in einen "elastischen" energieerhaltenden Trend vorteilhaft. Der lineare Trend ist allgemein eine lineare Interpolation durch den Drehmomentverlauf in der jeweiligen Richtung und eine Steigung im mathematischen Sinne.

Der Momententrend der elastischen Kraft wird dadurch gebildet, indem für jede Position des Verfahrweges die Hälfte des Mittelwertes aus dem linearen Trend in Vorwärtsrichtung und dem linearen Trend in Rückwärtsrichtung ermittelt wird. Diese neue Kenngröße ist richtungsunabhängig, kann aber je nach elastischem Verhalten des elastischen Gewichtsausgleichs unterschiedliche Werte an unterschiedlichen Positionen des Verfahrweges aufweisen. In entsprechender Weise erfolgt die Ermittlung des Krafttrends der elastischen Kraft auf Basis korrespondierender Kraftwerte.

Weiterhin ist eine rechnerisch ermittelte reibungsabhängige und richtungsunabhängige Kenngröße insbesondere ein mittleres Reibmoment, ein maximales Reibmoment, ein minimales Reibmoment oder ein Momententrend des Reibmoments. In analoger translatorischer Hinsicht ist diese Kenngröße eine mittlere Reibkraft, eine maximale Reibkraft, eine minimale Reibkraft oder eine Krafttrend der Reibkraft.

Das mittlere Reibmoment wird aus der Hälfte der Differenz aus dem Mittelswert des Drehmomentes in Vorwärtsrichtung und dem Mittelwert des Drehmomentes in Rückwärtsrichtung gebildet. Es beschreibt das Moment, welches zur Überwindung der Reibung erforderlich ist. In entsprechender Weise erfolgt die Ermittlung der mittleren Reibkraft auf Basis korrespondierender Kraftwerte.

Das maximale Reibmoment wird ermittelt, indem für jede Position des Verfahrweges die Hälfte des Maximums der Differenz des Drehmomentes in Vorwärts- und Rückwärtsrichtung gebildet wird. Es beschreibt das Drehmoment, welches zur Kompensation der maximalen Reibkraft der Achse erforderlich ist. In entsprechender Weise erfolgt die Ermittlung der maximalen Reibkraft auf Basis korrespondierender Kraftwerte.

Das minimale Reibmoment wird ermittelt, indem für jede Position des Verfahrweges die Hälfte des Minimums der Differenz des Drehmomentes in Vorwärts- und Rückwärtsrichtung gebildet wird. Es beschreibt das Drehmoment, welches zur Kompensation der minimalen Reibkraft der Achse erforderlich ist. In entsprechender Weise erfolgt die Ermittlung der minimalen Reibkraft auf Basis korrespondierender Kraftwerte.

Der Momententrend der Reibkraft wird dadurch gebildet, indem für jede Position des Verfahrweges die Hälfte der Differenz aus dem linearen Trend in Vorwärts- und Rückwärtsrichtung ermittelt wird. Diese neue Kenngröße ist richtungsunabhängig und ist in den Fällen vorteilhaft, bei welchen sich die Reibkraft in etwa linear mit dem Verfahrweg ändert, wie z.B. durch schlechte Justierungen der Führungen der Achse. In entsprechender Weise erfolgt die Ermittlung des Krafttrends der Reibkraft auf Basis korrespondierender Kraftwerte.

Schließlich kann die zumindest eine Kenngröße für mehrere angetriebene Achsen der Maschine ermittelt werden, wie z.B. bei Werkzeugmaschinen, welche üblicherweise eine Vielzahl von Achsen aufweist.

In entsprechender Weise können weitere, nicht weiter ausgeführte Kenngrößen aus den für beide Bewegungsrichtungen aufgezeichneten Drehmomentverläufen bzw. Achskraftverläufen in einen Anteil, der auf Reibkräften beruht, und in einen Anteil, der auf energieerhaltenden Kräften beruht, zerlegt werden. Die Kenngrößen können darüber hinaus unterschiedliche Gewichtungen aufweisen.

Bei den angegebenen Berechnungsmethoden wurde davon ausgegangen, dass für eine Bewegung in positiver Richtung ein positives Drehmoment und für eine Bewegung in negativer Richtung ein negatives Drehmoment gemessen wird. Für die positive Richtung wurde die Vorwärtsrichtung und für die negative Richtung die Rückwärtsrichtung angenommen. Bei einer anderen Zuordnung sind die betreffenden Kenngrößen in entsprechender Weise zu ändern.

Das erfindungsgemäße Verfahren zur Überwachung der zumindest einen Kenngröße der zumindest einen angetriebenen Achse der Maschine ist insbesondere bei einer Inbetriebnahme und/oder beim Einstellen und/oder im laufenden Betrieb der Maschine anwendbar. Es ist alternativ oder zusätzlich vorteilhaft in der Automatisierungs- und Fertigungstechnik anwendbar.

Die Aufgabe der Erfindung wird weiterhin mit einer Mess- und Auswerteeinheit zur Ermittlung zumindest einer Kenngröße zumindest einer angetriebenen nicht horizontal ausgerichteten Achse einer Maschine gelöst. Die jeweilige Achse der Maschine ist mittels einer rotierenden Antriebseinheit und/oder mittels einer linearen Antriebseinheit antreibbar. Die Mess- und Auswerteeinheit ist signal- und/oder datentechnisch mit einem Drehmomentsensor bzw. mit einem Kraftsensor zur Drehmoment- bzw. Kraftmessung der jeweiligen Achse und mit einem Weggeber zur Wegerfassung des Verfahrweges der jeweiligen Achse verbindbar. Die Mess- und Auswerteeinheit weist Mittel zur messtechnischen Erfassung des Drehmoments bzw. der Kraft der jeweiligen Achse in Vorwärts- und Rückwärtsrichtung auf. Sie weist weiterhin Mittel zur rechnerischen Ermittlung von energieerhaltenden Momenten bzw. Kräften einerseits und/oder reibungsabhängigen Momenten bzw. Kräften andererseits als die zumindest eine richtungsunabhängige Kenngröße durch rechnerische Überlagerung von zugehörigen Drehmoment- oder Kraftwerten auf.

Die Mess- und Auswerteeinheit kann z.B. ein PC oder Computer sein, welcher im Rahmen von Inbetriebsetzungs- oder Einstellarbeiten an der Maschine angeschlossen wird. Sie kann auch über ein Datennetz, wie z.B. dem Internet, mit einer Steuereinheit der Maschine verbunden sein. Die typischerweise in Form von Daten an die Mess- und Auswerteeinheit übertragenen Drehmomentwerte bzw. Kraftwerte können dann durch die Mess- und Auswerteeinheit ausgewertet werden.

Nach einer Ausführungsform weist die Mess- und Auswerteeinheit Mittel zur Erfassung der Drehmoment- bzw. Kraftwerte in Abhängigkeit des Verfahrweges der jeweiligen Achse auf. Hierzu kann die Mess- und Auswerteeinheit einen geeigneten Signaleingang zur Erfassung von Weggeber- oder Drehgebersignalen der Maschine aufweisen. Typischerweise liegen die positionsabhängigen Drehmoment- bzw. Kraftwerte in der Steuereinheit der Maschine bereits vor, so dass diese von der Mess- und Auswerteeinheit auf elektronischem Wege ausgelesen oder angefordert werden können.

Einer weiteren Ausführungsform zufolge weist die Mess- und Auswerteeinheit Mittel zur Berechnung der Verfahrgeschwindigkeit der jeweiligen Achse in Vorwärts- und Rückwärtsrichtung auf. Sie weist weiterhin Mittel zur Ermittlung der energieerhaltenden Momente und/oder der reibungsabhängigen Momente durch rechnerische Überlagerung der erfassten Drehmoment unter rechnerischer Berücksichtigung zugehöriger beschleunigungsabhängiger Trägheitskräfte und geschwindigkeitsabhängiger Reibkräfte auf. Alternativ oder zusätzlich kann die Mess- und Auswerteeinheit Mittel zur Ermittlung korrespondierender energieerhaltender und/oder reibungsabhängiger Kräfte durch Überlagerung entsprechender Kraftwerte aufweisen.

Der besondere Vorteil ist, dass eine Ermittlung der neuen Kenngrößen im laufenden Betrieb der Maschine möglich ist. Eine sonst notwendige Unterbrechung des Betriebes ist nicht erforderlich. In der Mess- und Auswerteeinheit können hierzu entsprechende mathematische Modelle der Maschine hinterlegt sein, welche das kinematische Verhalten der Maschine beschreiben.

Nach einer weiteren Ausführungsform kann die Mess- und Auswerteeinheit Ausgabemittel zur Ausgabe der zumindest einen rechnerisch ermittelten Kenngröße aufweisen. Die neuen Kenngrößen können z.B. auf einem Display der Mess- und Auswerteeinheit zur Anzeige gebracht werden.

Im Besonderen weist die Mess- und Auswerteeinheit Vergleichsmittel zum rechnerischen Vergleich der zumindest einen ermittelten Kenngröße mit einem jeweiligen Vergleichswert und weitere Ausgabemittel zur Ausgabe einer jeweiligen Warnmeldung im Falle einer unzulässigen Abweichung vom Vergleichswert auf. Dadurch kann ein automatisierter Hinweis, wie z.B. eine SMS oder ein Meldetext, an einen Servicefachmann ausgegeben werden.

Die genannten Mittel der Mess- und Auswerteeinheit sind vorzugsweise Prozessoren oder Mikrocontroller, auf welchen entsprechend geeignete Softwareprogramme ausgeführt werden. In den Softwareprogrammen sind die zuvor beschriebenen mathematischen Rechenvorschriften wie Mittelwertbildung, Differenzbildung, Maxima- und Minimalbildung abgebildet.

Analog zum Verfahren ist die rechnerisch ermittelbare, energieerhaltende und richtungsunabhängige Kenngröße vorzugsweise ein Momentenoffset, ein maximales erhaltendes Moment, ein minimales erhaltendes Moment oder ein Momententrend der elastischen Kraft bzw. ein Kraftoffset, eine maximale erhaltende Kraft, eine minimale erhaltende Kraft oder ein Krafttrend der elastischen Kraft. Die ermittelbare reibungsabhängige und richtungsunabhängige Kenngröße ist vorzugsweise ein mittleres Reibmoment, ein maximales Reibmoment, ein minimales Reibmoment oder ein Momententrend der Reibkraft bzw. eine mittlere Reibkraft, eine maximale Reibkraft, eine minimale Reibkraft oder ein Krafttrend der Reibkraft.

Die erfindungsgemäße Mess- und Auswerteeinheit ist vorzugsweise zur Überwachung der zumindest einen Kenngröße der jeweils insbesondere hängenden angetriebenen Achse der Maschine, insbesondere einer Werkzeugmaschine, bei einer Inbetriebnahme und/oder beim Einstellen und/oder im laufenden Betrieb der Maschine verwendbar.

Weiterhin wird die Aufgabe der Erfindung durch ein Steuergerät zur Steuerung und Überwachung einer Maschine gelöst. Die Maschine ist insbesondere eine Werkzeugmaschine, welche zumindest eine über das Steuergerät ansteuerbare rotierende Antriebseinheit und/oder eine lineare Antriebseinheit zum linearen Verfahren zumindest einer insbesondere hängenden Achse der Maschine aufweist. Weiterhin weist die Maschine einen Drehmomentsensor bzw. einen Kraftsensor zur Drehmoment- bzw. Kraftmessung der jeweiligen Achse sowie einen Weggeber zur Wegerfassung des Verfahrweges der jeweiligen Achse auf. Das signal- und/oder datentechnisch mit der Maschine verbundene bzw. anschließbare erfindungsgemäße Steuergerät weist dabei eine derartige Mess- und Auswerteeinheit auf.

Das Steuergerät ist insbesondere eine so genannte CNC (für Computerized Numerical Control), welche typischerweise eine Steuereinheit zur Steuerung der Bewegungsbahn der Achsen und eine Steuereinheit zur Logiksteuerung, ein so genannte SPS (für Speicherprogrammierbare Steuerung), aufweist. Vorzugsweise ist die Mess- und Auswerteeinheit bzw. deren Funktionalität in dem Steuergerät integriert. Da typischerweise das Steuergerät signaltechnisch und/oder datentechnisch mit allen Sensoren der Maschine verbunden ist, liegen prinzipiell die von der Mess- und Auswerteeinheit zu verarbeitenden Drehmoment- bzw. Kraftwerte sowie die jeweilige aktuelle Verfahrposition der Achsen im Steuergerät bereits vor. Im Idealfall ist die Mess- und Auswerteeinheit eine im Programmspeicher der Steuereinheit, insbesondere eine im Programmspeicher der Bahnsteuerung für die Achsen, hinterlegte Softwareroutine.

Schließlich wird die Aufgabe der Erfindung durch eine Maschine, insbesondere durch eine Werkzeugmaschine, gelöst, welche ein derartiges Steuergerät und zumindest einer über das Steuergerät ansteuerbare rotierende Antriebseinheit und/oder eine lineare Antriebseinheit zum linearen Verfahren einer jeweiligen insbesondere hängenden Achse der Maschine aufweist.

Typischerweise weist die zumindest eine rotierende Antriebseinheit jeweils einen Umrichter, einen Elektromotor und einen Spindeltrieb zum Umsetzen der Drehbewegung des Elektromotors in eine lineare Verfahrbewegung der jeweiligen Achse auf. Der Umrichter der jeweiligen Antriebseinheit weist einen Stromsensor zur Erfassung eines Motorstroms auf. Das Steuergerät weist Mittel zur Berechnung des aktuell auf den Elektromotor wirkenden Drehmomentes aus einem mittels des Stromsensors erfassten Stromwert auf.

Bekanntermaßen besteht ein im Wesentlichen linearer Zusammenhang zwischen dem drehmomentbildenden Motorstrom und dem entsprechenden Drehmoment. Dieser lineare Zusammenhang wird üblicherweise durch die so genannte Drehmomentkonstante beschrieben. Mit anderen Worten sind die zur Ermittlung der neuen Kenngrößen der Achsen erforderlichen Drehmomentwerte direkt aus den zur Antriebssteuerung bereits erfassten Stromwerten ableitbar.

Alternativ oder zusätzlich zur vorherigen Ausführungsform weist die zumindest eine lineare Antriebseinheit jeweils einen Umrichter und einen Linearmotor zum Verfahren der jeweiligen Achse auf. Der Umrichter der jeweiligen Antriebseinheit weist einen Stromsensor zur Erfassung eines Linearmotorstroms auf. Das Steuergerät weist Mittel zur Berechnung der aktuell auf den Linearmotor wirkenden Kraft aus einem mittels des Stromsensors erfassten Stromwert auf.

Die zur Berechnung der neuen Kenngrößen erforderlichen Kraftwerte sind in entsprechender Weise aus den bereits erfassten Motorstromwerten des Linearmotors ableitbar. In diesem Fall ist der Proportionalitätsfaktor zwischen Motorstrom und Achskraft der so genannte Kraftfaktor.

Die Erfindung sowie vorteilhafte Ausführungen der Erfindung werden im Weiteren anhand der nachfolgenden Figuren näher beschrieben. Es zeigen
- FIG 1: ein Flussdiagramm zur Veranschaulichung des erfindungsgemäßen Verfahrens,
- FIG 2: Rechenvorschriften zur Ermittlung von neuen, beispielhaft rotatorischen Kenngrößen,
- FIG 3: beispielhaft den Drehmomentverlauf einer hängenden Achse mit elastischem Gewichtsausgleich für beide Richtungen der Achse und mit eingetragenen herkömmlichen Kenngrößen,
- FIG 4: beispielhaft den Drehmomentverlauf gemäß FIG 3 mit eingetragenen neuen, richtungsunabhängigen Kenngrößen gemäß der Erfindung und
- FIG 5: beispielhaft eine erfindungsgemäße Werkzeugmaschine mit einer hängenden Achse mit elastischem, pneumatischem Gewichtsausgleich.

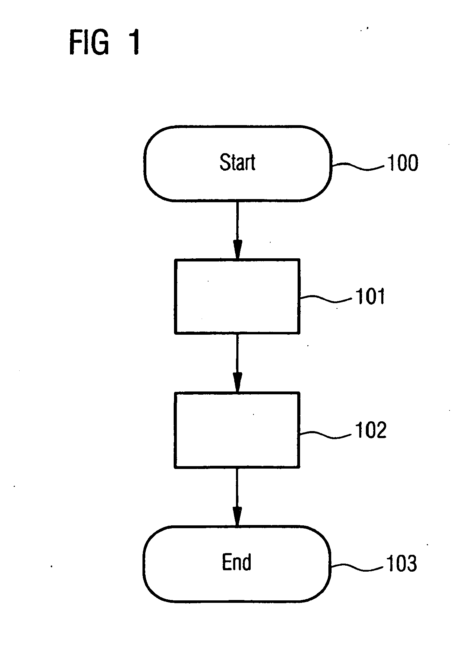

FIG 1 zeigt ein Flussdiagramm zur Veranschaulichung des erfindungsgemäßen Verfahrens.

Der mit "START" bezeichnete Verfahrensschritt 100 umfasst die bereits bekannten Verfahrensmerkmale zur Ermittlung zumindest einer Kenngröße K1-K8 insbesondere einer hängenden angetriebenen Achse 5 einer Maschine 1 entsprechend dem Oberbegriff des Anspruchs 1. Im Verfahrensschritt 101 wird erfindungsgemäß das Drehmoment MF, MR bzw. die Kraft in Vorwärts- und Rückwärtsrichtung gemessen. Im Verfahrensschritt 102 werden weiterhin gemäß der Erfindung energieerhaltende Momente K2-K4, K8 bzw. energieerhaltende Kräfte einerseits und/oder reibungsabhängige Momente K1, K5-K7 bzw. reibungsabhängige Kräfte andererseits durch rechnerische Überlagerung von zugehörigen Drehmoment- oder Kraftwerten als die zumindest eine richtungsunabhängige Kenngröße K1-K8 ermittelt. Mit dem Bezugszeichen 103 ist das Ende des erfindungsgemäßen Verfahrens bezeichnet.

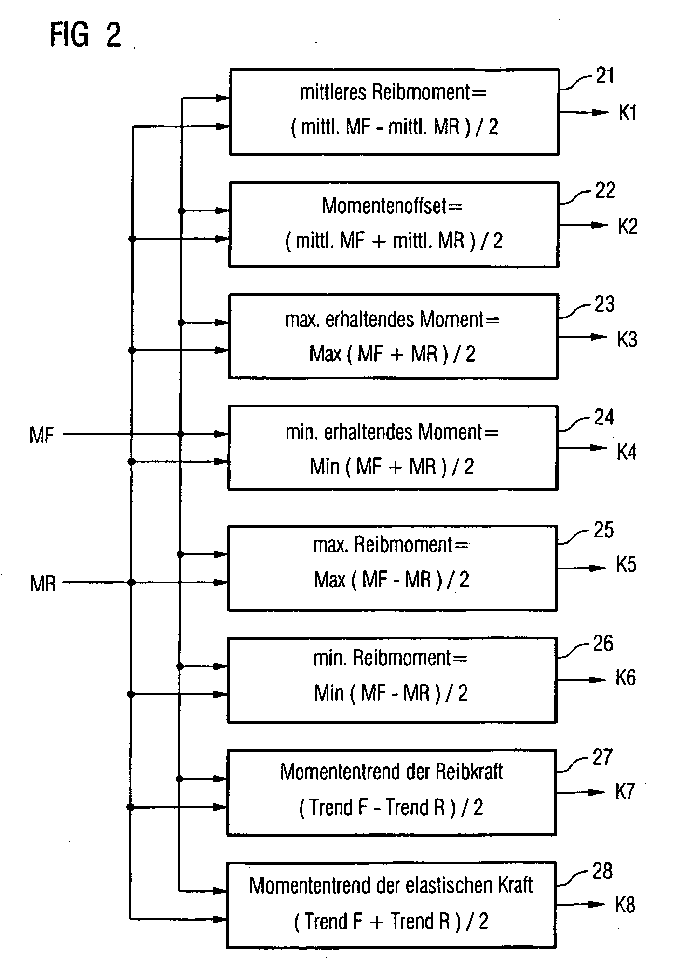

FIG 2 zeigt die jeweiligen Rechenvorschriften 21-28 zur Ermittlung von neuen, beispielhaft rotatorischen Kenngrößen K1-K8.

Mit MF sind das Drehmoment bzw. die zugehörigen Drehmomentwerte in Vorwärtsrichtung bezeichnet. Mit MR sind das Drehmoment bzw. die zugehörigen Drehmomentwerte in Rückwärtsrichtung bezeichnet. Die Drehmomentwerte MF, MR gehen in die Berechnung aller neuen Kenngrößen K1-K8 ein.

Die beispielhaft acht Rechenvorschriften 21-28 ermitteln in der Darstellung von oben nach unten ein mittleres Reibmoment K1, einen Momentenoffset K2, ein maximales erhaltendes Moment K3, ein minimales erhaltendes Moment 4, ein maximales Reibmoment K5, ein minimales Reibmoment K6, einen Momententrend der Reibkraft K7 sowie einen Momententrend der elastischen Kraft K8. Darüber hinaus sind weitere Rechenvorschriften denkbar, welche eine Trennung der gemessenen Drehmomentwerte in einen reibwertabhängigen und einen energieerhaltenden Anteil beschreiben. Die weiteren Rechenvorschriften können hierzu geeignete Normierungen auf einen vorgegebenen Drehmomentwert, arithmetische oder geometrische Gewichtungen und dergleichen umfassen.

Die in FIG 2 gezeigten Rechenvorschriften 21-28 sind in analoger Weise auf translatorische Achskraftwerte zur Ermittlung korrespondierender translatorischer Kenngrößen K1-K8 übertragbar.

Insbesondere sind die Kenngrößen K2-K4, K8 energieerhaltende Momente, welche eine über eine Achse auf die Antriebseinheit einwirkende Gewichtskraft kompensieren. Sie können zudem eine über die Achse auf die Antriebseinheit einwirkende elastische Kraft zumindest teilweise kompensieren. Die elastische Kraft kann beispielsweise von einem pneumatischen oder hydraulischen Ausgleichselement stammen.

Die Drehmomentwerte MF, MR werden vorzugsweise bei einer vorgegebenen konstanten Verfahrgeschwindigkeit in Vorwärts- und Rückwärtsrichtung gemessen. Alternativ kann zur Ermittlung der neuen Kenngrößen K1-K8 die jeweilige zu den Drehmomentwerten MF, MR zugehörige Verfahrgeschwindigkeit jeweils in Vorwärts- und Rückwärtsrichtung gemessen werden. Die neuen Kenngrößen K1-K8 können dann durch rechnerische Überlagerung der Drehmomentwerte MF, MR unter rechnerischer Berücksichtigung zugehöriger beschleunigungsabhängiger Trägheitskräfte und geschwindigkeitsabhängiger Reibkräfte im Sinne einer Normierung ermittelt werden. Vorzugsweise werden dann die Drehmomentwerte MF, MR in Abhängigkeit eines Verfahrweges der Achse gemessen.

Im Anschluss können die rechnerisch ermittelten Kenngrößen K1-K8 mit einem jeweiligen Vergleichswert verglichen werden, so dass eine entsprechende Warnmeldung im Falle einer unzulässigen Abweichung vom Vergleichswert ausgegeben werden kann, wie z.B. an einen Servicefachmann.

Das erfindungsgemäße Verfahren ist generell zur Ermittlung der Kenngrößen K1-K8 für mehrere angetriebene Achsen der Maschine geeignet. Es kann insbesondere zur Überwachung der Kenngrößen K1-K8 der jeweiligen angetriebenen Achse bei einer Inbetriebnahme und/oder beim Einstellen und/oder im laufenden Betrieb der Maschine angewendet werden. Zusätzlich oder alternativ kann das erfindungsgemäße Verfahren in der Automatisierungs- und Fertigungstechnik eingesetzt werden.

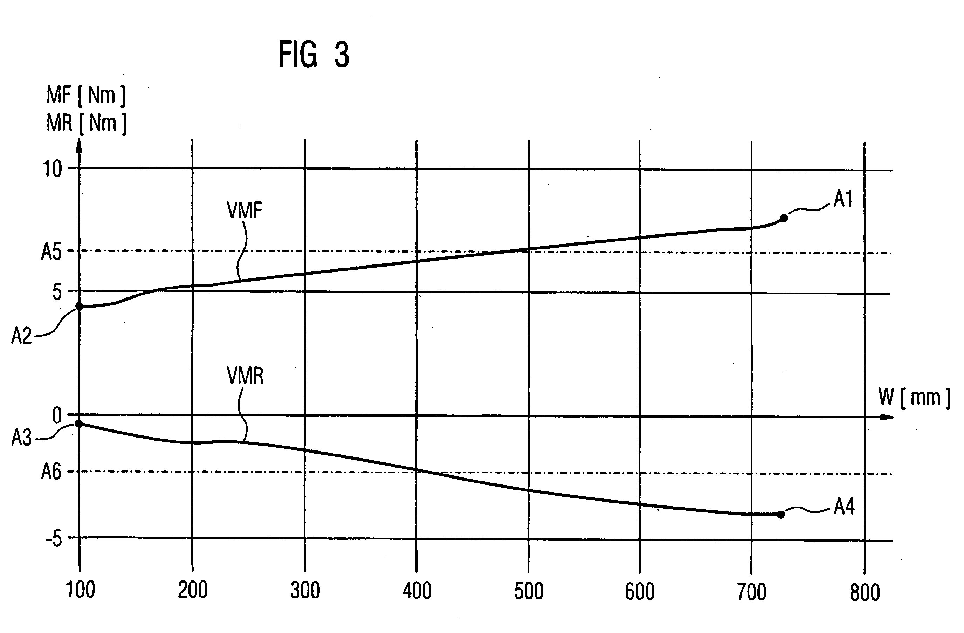

FIG 3 zeigt beispielhaft den Drehmomentverlauf VMF, VMR einer hängenden Achse mit elastischem Gewichtsausgleich für beide Richtungen der Achse und mit eingetragenen herkömmlichen richtungsabhängigen Kenngrößen A1-A6. Mit VMF ist der Kennlinienverlauf in Vorwärtsrichtung und mit VMR der Kennlinienverlauf in Rückwärtsrichtung bezeichnet. Es ist über der jeweiligen Position des Verfahrweges W der Achse in Millimeter [mm] das entsprechende Drehmoment MF, MR in Newtonmeter [Nm] aufgetragen. Mit dem Bezugszeichen A1 ist ein maximales Moment in Vorwärtsrichtung, mit A2 ein minimales Moment in Vorwärtsrichtung, mit A3 ein maximales Moment in Rückwärtsrichtung, mit A4 ein minimales Moment in Rückwärtsrichtung, mit A5 ein mittleres Moment in Vorwärtsrichtung und mit A6 ein mittleres Moment in Rückwärtsrichtung bezeichnet. Die beiden letzteren Werte A5, A6 sind gestrichelt dargestellt.

Wie FIG 3 zeigt, wird für das Verfahren der hängenden Achse in Vorwärtsrichtung ein deutlich höheres Drehmoment MF benötigt als in Rückwärtsrichtung. Die beispielhaften in etwa linear steigenden bzw. abnehmenden Drehmomentverläufe VMF, VMR zeigen weiter, dass keine vollständige Kompensation der auf die hängende Achse einwirkenden Gewichtskraft vorliegt. Insbesondere sind im Endbereich des Verfahrweges ausgeprägte Störkräfte in Form von Nichtlinearitäten erkennbar, die im typischerweise nichtlinearen Verhalten der elastischen Elemente begründet sind.

Im Beispiel der FIG 3 liegen die maximalen bzw. minimalen Drehmomentwerte MF, MR am Anfang und am Ende des Verfahrbereichs, das heißt in etwa bei der Verfahrwegposition 100 mm und 730 mm. Sie können andererseits auch zwischen diesen beiden Endpositionen liegen. Wie die FIG 3 zeigt, muss eine Überwachung z.B. der maximalen Drehmomentwerte A1, A3 auf eine Überschreitung hin nachteilig abhängig von der jeweiligen Verfahrrichtung der Achse erfolgen. In Vorwärtsrichtung ist das maximale Momente A1 und in Rückwärtsrichtung das maximale Moment A3 zu überwachen.

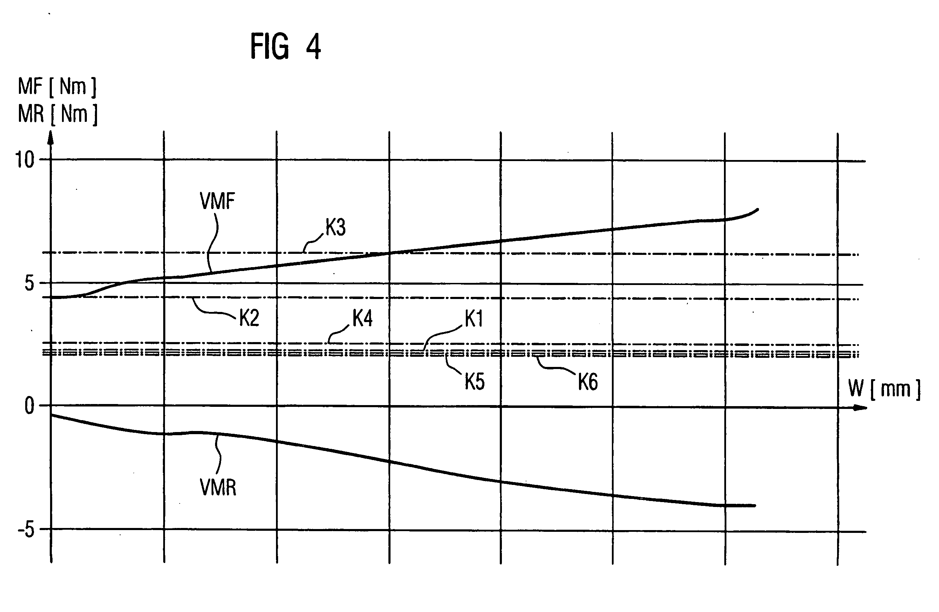

FIG 4 zeigt beispielhaft den Drehmomentverlauf gemäß FIG 3 mit eingetragenen neuen, richtungsunabhängigen Kenngrößen gemäß der Erfindung.

Die über dem Verfahrweg W gemessenen Drehmomentwerte MF, MR sind nun gemäß der Erfindung in die neuen richtungsunabhängigen Kenngrößen K1-K6 abgebildet. Die drei Reibmomente K1, K5 und K6 liegen dabei sehr eng beieinander. Die unterscheiden sich betragsmäßig nur sehr wenig. Folglich muss dann auch der im Beispiel der FIG 4 nicht eingetragene Momententrend der Reibkraft betragsmäßig sehr kleine Werte aufweisen, während der Momententrend der elastischen Kraft vergleichsweise hohe Werte aufweisen muss. Dies ist die unmittelbare Folge des "Herausrechnens" des betragsmäßig wesentlich größeren Anteils der energieerhaltenden Momente aus den gemessenen Drehmomentwerten MF, MR. Dadurch ist nun vorteilhaft eine deutlich genauere Überwachung des Bewegungsverlaufs einer Achse in Hinblick auf deren reibungsbehaftetes Verhalten hin möglich. Zur Überwachung ist vorteilhaft jeweils nur eine richtungsunabhängige Kenngröße K1-K6 anstelle von jeweils zwei richtungsabhängigen herkömmlichen Kenngrößen A1-A6 erforderlich. In entsprechender Weise ist auch eine gezielte Überwachung des Bewegungsverlaufs der Achse in Hinblick auf deren energieerhaltendes Verhalten hin möglich. Dadurch können z.B. Undichtigkeiten an pneumatischen oder hydraulischen Elementen zur elastischen Gewichtskompensation erkannt werden. Reibungsabhängige Anteile sind in diesem Fall "herausgerechnet" und beeinflussen die Kenngrößen K2-K4 nicht.

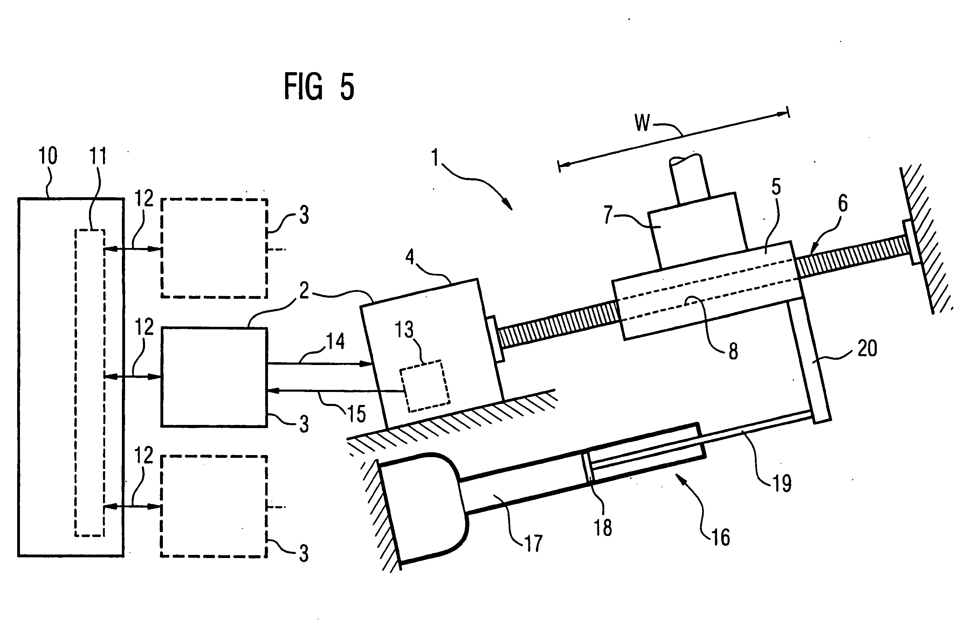

FIG 5 zeigt beispielhaft eine erfindungsgemäße Werkzeugmaschine 1 mit einer hängenden Achse 5 mit elastischem, pneumatischem Gewichtsausgleich 16.

Im rechten Teil der FIG 5 ist eine hängende Achse 5 der Werkzeugmaschine 1 zu sehen. Mit W ist der mögliche Verfahrweg der Achse 5 gekennzeichnet. Eine rotierende Antriebseinheit 2 mit einem Umrichter 3, einem Elektromotor 4 und einem Spindeltrieb 6 setzt die Drehbewegung des Elektromotors 4 in eine lineare Verfahrbewegung der gezeigten Achse 5 um. Mit dem Bezugszeichen 7 ist beispielhaft ein Werkzeug bezeichnet, welches zum Bearbeiten eines Werkstücks durch die Achse 5 verfahren werden kann. Mit dem Bezugszeichen 8 ist ein Innengewinde der Achse 5 bezeichnet, in welches die Spindel aufgenommen ist.

An der Achse 5 ist weiterhin beispielhaft eine Halterung 20 angebracht, welche über einen Schieber 20 einen an einem Schieberende angebrachten Kolben in Abhängigkeit des Verfahrweges W betätigt. Der Kolben ist verschiebbar in einem zylinderförmigen Fortsatz eines Druckluftbehälters 17 angebracht. Letzter wirkt als elastisches Element 16 gewichtskraftausgleichend auf die Achse 5. Die vom Druckbehälter 17 über die Halterung 20 auf die Achse 5 wirkende elastische Kraft ist typischerweise nicht linear mit dem Verfahrweg W, sondern eher parabolischer Natur.

Im linken Teil der FIG 5 ist ein erfindungsgemäßes Steuergerät 10 zu sehen, welches zur Steuerung und Überwachung signal- und/oder datentechnisch mit der Maschine 1 verbunden ist. Es ist typischerweise Bestandteil der Werkzeugmaschine 1. Das Steuergerät 10 weist eine erfindungsgemäße Mess- und Auswerteeinheit 11 auf, die im Beispiel der vorliegenden FIG 5 in der Steuereinheit 11 des Steuergerätes 10 bereits integriert ist. Mit dem Bezugszeichen 3 sind Umrichter zur Speisung jeweils eines Elektromotors 4 zum Verfahren der jeweiligen Achse 3 bezeichnet, wobei im Beispiel der FIG 3 der Einfachheit halber nur eine Achse 3 zeichnerisch dargestellt ist. Der mittlere Umrichter 3 ist zum einen datentechnisch über entsprechende Steuerleitungen 12 mit dem Steuergerät 10 und zum anderen über Motorleitungen 14 mit dem Elektromotor 4 zur elektrischen Speisung verbunden. Mit dem Bezugszeichen 13 ist ein Drehmomentsensor zur Erfassung des auf den Elektromotor 4 einwirkenden Drehmoments bezeichnet. Die entsprechenden Drehmomentwerte werden daten- und/oder signaltechnisch über eine Sensorleitung 15 vom Umrichter 3 zur Regelung des Elektromotors 4 erfasst. Die Drehmomentwerte werden zur erfindungsgemäßen Ermittlung der neuen richtungsunabhängigen Kenngrößen unter anderem über den Umrichter 3 weiter an das Steuergerät 10 bzw. an die Mess- und Auswerteeinheit 11 weitergeleitet. Die rechnerischen Mittel der Mess- und Auswerteinheit 11 führen dabei die in FIG 2 gezeigten Rechenvorschriften 21-28 durch.

Vorzugsweise weist der Umrichter 3 der Antriebseinheit 2 einen nicht weiter dargestellten Stromsensor zur Erfassung eines Motorstroms auf. Das Steuergerät 10 weist in diesem Fall Mittel zur Berechnung des aktuell auf den Elektromotor 4 wirkenden Drehmomentes MF, MR aus einem mittels des Stromsensors erfassten Stromwert auf.

Anstelle der in FIG 5 gezeigten rotatorischen Antriebseinheit kann die Maschine 1 auch eine oder mehrere lineare Antriebseinheiten mit jeweils einem Umrichter 3 und einem Linearmotor zum Verfahren der jeweiligen Achse 5 aufweisen. In diesem Fall sind die Mittel der Mess- und Auswerteeinheit 11 des Steuergerätes 10 dazu ausgebildet, die neuen richtungsunabhängigen translatorischen Kenngrößen K1-K8 auf Basis von gemessenen Kraftwerten bzw. Achskraftwerten zu ermitteln. Vorzugsweise weist dann der Umrichter 3 der jeweiligen Antriebseinheit einen Stromsensor zur Erfassung eines Linearmotorstroms auf. Weiterhin weist das Steuergerät 10 Mittel zur Berechnung der aktuell auf den Linearmotor wirkenden Kraft aus einem mittels des Stromsensors erfassten Stromwert auf.

## Patentansprüche

1. Verfahren zur Ermittlung zumindest einer Kenngröße (K1-K8) einer angetriebenen nicht horizontal ausgerichteten Achse (5) einer Maschine (1), wobei die Achse (5) mittels einer rotierenden Antriebseinheit (2) und/oder mittels einer linearen Antriebseinheit angetrieben wird,
**dadurch gekennzeichnet,**
- dass entlang eines vorgegebenen Verfahrweges (W) der Achse (5) ein auf die Antriebseinheit (2) einwirkendes Drehmoment (MF, MR) bzw. eine dazu korrespondierende Kraft gemessen wird,
- dass das Drehmoment (MF, MR) bzw. die Kraft in Vorwärts- und Rückwärtsrichtung gemessen wird und
- dass energieerhaltende Momente (K2-K4, K8) bzw. energieerhaltende Kräfte einerseits und/oder reibungsabhängige Momente (K1, K5-K7) bzw. reibungsabhängige Kräfte andererseits durch rechnerische Überlagerung von zugehörigen Drehmoment- bzw. Kraftwerten als die zumindest eine richtungsunabhängige Kenngröße (K1-K8) ermittelt werden, wobei ein energieerhaltendes Moment (K2-K4, K8) dasjenige Moment ist, welches eine über die Achse (5) auf die Antriebseinheit (2) einwirkende Gewichtskraft und/oder elastische Kraft kompensiert bzw. dass eine energieerhaltende Kraft diejenige Kraft ist, welche die einwirkende Gewichtskraft und/oder eine korrespondierend einwirkende elastische Kraft kompensiert.

2. Verfahren nach Anspruch 1,
**dadurch gekennzeichnet,**
**dass** das Drehmoment (MF, MR) bzw. die Kraft bei einer vorgegebenen konstanten Verfahrgeschwindigkeit der Achse (5) in Vorwärts- und Rückwärtsrichtung gemessen wird.

3. Verfahren nach Anspruch 1 oder 2,
**dadurch gekennzeichnet,**
- **dass** zu dem Drehmoment (MF, MR) die jeweilige zugehörige Verfahrgeschwindigkeit in Vorwärts- und Rückwärtsrichtung gemessen wird und
- **dass** die energieerhaltenden Momente (K2-K4, K8) und/oder die reibungsabhängigen Momente (K1, K5-K7) durch rechnerische Überlagerung der Drehmomentwerte unter rechnerischer Berücksichtigung zugehöriger beschleunigungsabhängiger Trägheitskräfte und geschwindigkeitsabhängiger Reibkräfte ermittelt werden bzw.
- **dass** die korrespondierenden energieerhaltenden und/oder reibungsabhängigen Kräfte durch Überlagerung entsprechender Kraftwerte ermittelt werden.

4. Verfahren nach einem der vorangegangenen Ansprüche,
**dadurch gekennzeichnet,**
**dass** die Drehmoment- bzw. Kraftwerte in Abhängigkeit des Verfahrweges (W) der Achse (5) gemessen werden.

5. Verfahren nach einem der vorangegangenen Ansprüche,
**dadurch gekennzeichnet,**
**dass** die zumindest eine rechnerisch ermittelte Kenngröße (K1-K8) mit einem jeweiligen Vergleichswert verglichen wird und dass im Falle einer unzulässigen Abweichung vom Vergleichswert eine Warnmeldung ausgegeben wird.

6. Verfahren nach einem der vorangegangenen Ansprüche,
**dadurch gekennzeichnet,**
**dass** eine rechnerisch ermittelte, energieerhaltende und richtungsunabhängige Kenngröße (K2-K4, K8) ein Momentenoffset (K2), ein maximales erhaltendes Moment (K3), ein minimales erhaltendes Moment (K4) oder ein Momententrend (K8) der elastischen Kraft ist bzw. ein Kraftoffset, eine maximale erhaltende Kraft, eine minimale erhaltende Kraft oder ein Krafttrend der elastischen Kraft ist.

7. Verfahren nach einem der vorangegangenen Ansprüche,
**dadurch gekennzeichnet,**
**dass** eine rechnerisch ermittelte reibungsabhängige und richtungsunabhängige Kenngröße (K1, K5-K7) ein mittleres Reibmoment (K1), ein maximales Reibmoment (K5), ein minimales Reibmoment (K6) oder ein Momententrend (K7) der Reibkraft ist bzw. eine mittlere Reibkraft, eine maximale Reibkraft, eine minimale Reibkraft oder ein Krafttrend der Reibkraft ist.

8. Verfahren nach einem der vorangegangenen Ansprüche,
**dadurch gekennzeichnet,**
**dass** die zumindest eine Kenngröße (K1-K8) für mehrere angetriebene Achsen (5) der Maschine (1) ermittelt wird.

9. Anwendung des Verfahrens nach einem der Ansprüche 1 bis 8 zur Überwachung der zumindest einen Kenngröße (K1-K8) der zumindest einen angetriebenen Achse (5) der Maschine (1) bei einer Inbetriebnahme und/oder beim Einstellen und/oder im laufenden Betrieb der Maschine (1).

10. Anwendung des Verfahrens nach einem der Ansprüche 1 bis 8 in der Automatisierungs- und Fertigungstechnik.

11. Mess- und Auswerteeinheit, die eingerichtet ist zur Ermittlung zumindest einer Kenngröße (K1-K8) zumindest einer angetriebenen nicht horizontal ausgerichteten Achse (5) einer Maschine (1), wobei die jeweilige Achse (5) der Maschine (1) mittels einer rotierenden Antriebseinheit (2) und/oder mittels einer linearen Antriebseinheit angetrieben ist,
**dadurch gekennzeichnet,**
- dass die Mess- und Auswerteeinheit signal- und/oder datentechnisch mit einem Drehmomentsensor (13) bzw. mit einem Kraftsensor, der eingerichtet ist zur Drehmoment- bzw. Kraftmessung der jeweiligen Achse (5) und mit einem Weggeber, der eingerichtet ist zur Wegerfassung des Verfahrweges (W) der jeweiligen Achse (5), verbunden ist,
- dass die Mess- und Auswerteeinheit Mittel, die eingerichtet sind zur messtechnischen Erfassung des Drehmomentes (MF, MR) bzw. der Kraft der jeweiligen Achse (5) in Vorwärts- und Rückwärtsrichtung und Mittel, die eingerichtet sind zur rechnerischen Ermittlung von energieerhaltenden Momenten (K2-K4, K8) bzw. Kräften einerseits und/oder reibungsabhängigen Momenten (K1, K5-K7) bzw. Kräften andererseits als die zumindest eine richtungsunabhängige Kenngröße (K1-K8) durch rechnerische Überlagerung von zugehörigen Drehmoment- bzw. Kraftwerten, aufweist, wobei ein energieerhaltendes Moment (K2-K4, K8) dasjenige Moment ist, welches eine über die Achse (5) auf die Antriebseinheit (2) einwirkende Gewichtskraft und/oder elastische Kraft kompensiert bzw. dass eine energieerhaltende Kraft diejenige Kraft ist, welche die einwirkende Gewichtskraft und/oder eine korrespondierend einwirkende elastische Kraft kompensiert.

12. Mess- und Auswerteeinheit nach Anspruch 11,
**dadurch gekennzeichnet,**
**dass** die Mess- und Auswerteeinheit Mittel, die eingerichtet sind zur Erfassung der Drehmoment- bzw. Kraftwerte in Abhängigkeit des Verfahrweges (W) der jeweiligen Achse (5), aufweist.

13. Mess- und Auswerteeinheit nach Anspruch 12,
**dadurch gekennzeichnet,**
**dass** die Mess- und Auswerteeinheit Mittel, die eingerichtet sind zur Berechnung der Verfahrgeschwindigkeit der jeweiligen Achse (5) in Vorwärts- und Rückwärtsrichtung, aufweist und dass die Mess- und Auswerteeinheit Mittel, die eingerichtet sind zur Ermittlung der energieerhaltenden Momente (K2-K4, K8) und/oder der reibungsabhängigen Momente (K1, K5-K7) durch rechnerische Überlagerung zugehöriger Drehmomentwerte unter rechnerischer Berücksichtigung zugehöriger beschleunigungsabhängiger Trägheitskräfte und geschwindigkeitsabhängiger Reibkräfte, aufweist bzw. dass die Mess- und Auswerteeinheit Mittel aufweist, die eingerichtet sind zur Ermittlung korrespondierender energieerhaltender und/oder reibungsabhängiger Kräfte durch Überlagerung entsprechender Kraftwerte.

14. Mess- und Auswerteeinheit nach einem der Ansprüche 11 bis
13, **dadurch gekennzeichnet,**
**dass** die Mess- und Auswerteeinheit Ausgabemittel aufweist, die eingerichtet sind zur Ausgabe der zumindest einen rechnerisch ermittelten Kenngröße (K1-K8).

15. Mess- und Auswerteeinheit nach einem der Ansprüche 11 bis 14, **dadurch gekennzeichnet,**
**dass** die Mess- und Auswerteeinheit Vergleichsmittel, die zum rechnerischen Vergleich der zumindest einen ermittelten Kenngröße (K1-K8) mit einem jeweiligen Vergleichswert eingerichtet sind und weitere Ausgabemittel, die zur Ausgabe einer jeweiligen Warnmeldung im Falle einer unzulässigen Abweichung vom Vergleichswert eingerichtet sind, aufweist.

16. Mess- und Auswerteeinheit nach einem der Ansprüche 11 bis 15, **dadurch gekennzeichnet,**
**dass** die rechnerisch ermittelbare, energieerhaltende und richtungsunabhängige Kenngröße (K2-K4, K8) ein Momentenoffset (K2), ein maximales erhaltendes Moment (K3), ein minimales erhaltendes Moment (K4) oder ein Momententrend (K8) der elastischen Kraft ist bzw. ein Kraftoffset, eine maximale erhaltende Kraft, eine minimale erhaltende Kraft oder ein Krafttrend der elastischen Kraft ist.

17. Mess- und Auswerteeinheit nach einem der Ansprüche 11 bis 16, **dadurch gekennzeichnet,**
**dass** die ermittelbare reibungsabhängige und richtungsunabhängige Kenngröße (K1, K5-K7) ein mittleres Reibmoment (K1), ein maximales Reibmoment (K5), ein minimales Reibmoment (K6) oder ein Momententrend (K7) der Reibkraft ist bzw. eine mittlere Reibkraft, eine maximale Reibkraft, eine minimale Reibkraft oder ein Krafttrend der Reibkraft ist.

18. Verwendung der Mess- und Auswerteeinheit (11) nach einem der Ansprüche 11 bis 17 zur Überwachung der zumindest einen Kenngröße (K1-K8) der jeweils angetriebenen nicht horizontal ausgerichteten Achse (5) der Maschine (1), insbesondere einer Werkzeugmaschine, bei einer Inbetriebnahme und/oder beim Einstellen und/oder im laufenden Betrieb der Maschine (1).

19. Steuergerät, welches eingerichtet ist zur Steuerung und Überwachung einer Maschine (1), insbesondere für eine Werkzeugmaschine, wobei das Steuergerät eine Mess- und Auswerteeinheit (11) nach einem der vorangegangenen Ansprüche 11 bis 17 aufweist.

20. Maschine, insbesondere Werkzeugmaschine, mit einem Steuergerät (10) nach Anspruch 19 und mit zumindest einer über das Steuergerät (10) ansteuerbaren rotierenden Antriebseinheit (2) und/oder einer linearen Antriebseinheit zum linearen Verfahren einer jeweiligen nicht horizontal ausgerichteten Achse (5) der Maschine (1).

21. Maschine nach Anspruch 20,
**dadurch gekennzeichnet,**
- **dass** die zumindest eine rotierende Antriebseinheit (2) jeweils einen Umrichter (3), einen Elektromotor (4) und einen Spindeltrieb (6) zum Umsetzen der Drehbewegung des Elektromotors (4) in eine lineare Verfahrbewegung der jeweiligen Achse (5) aufweist,
- **dass** der Umrichter (3) der jeweiligen Antriebseinheit (2) einen Stromsensor zur Erfassung eines Motorstroms aufweist und
- **dass** das Steuergerät (10) Mittel aufweist, die ausgerichtet sind zur Berechnung des aktuell auf den Elektromotor (4) wirkenden Drehmomentes (MF, MR) aus einem mittels des Stromsensors erfassten Stromwert.

22. Maschine nach Anspruch 20 oder 21,
**dadurch gekennzeichnet,**
- **dass** die zumindest eine lineare Antriebseinheit jeweils einen Umrichter (3) und einen Linearmotor aufweist, der eingerichtet ist zum Verfahren der jeweiligen Achse (5),
- **dass** der Umrichter (3) der jeweiligen Antriebseinheit einen Stromsensor aufweist, der eingerichtet ist zur Erfassung eines Linearmotorstroms und
- **dass** das Steuergerät (10) Mittel aufweist, die eingerichtet sind zur Berechnung der aktuell auf den Linearmotor wirkenden Kraft aus einem mittels des Stromsensors erfassten Stromwert.

## Claims

1. Method for determining at least one characteristic value (K1-K8) of a driven non-horizontal axis (5) of a machine (1), with the axis (5) being driven by means of a rotating drive unit (2) and/or by means of a linear drive unit,
**characterised in that**
- a torque (MF, MR) acting on the drive unit (2) or a force corresponding to said torque is measured along a predetermined movement path (W) of the axis (5),
- that the torque (MF, MR) or the force is measured in the forward and reverse direction and
- that energy-conserving moments (K2-K4, K8) or energy-conserving forces on the one hand and/or friction-dependent moments (K1, K5-K7) or friction-dependent forces on the other hand are determined by computational overlaying of associated torque or force values as the at least one direction-independent characteristic value (K1-K8), with an energy-conserving moment (K2-K4, K8) being the moment which compensates for a weight and/or elastic force acting on the drive unit (2) by way of the axis (5) and/or that the energy-conserving force is the force which compensates for the weight and/or elastic force corresponding thereto which act on thereupon.

2. Method according to claim 1,
**characterised in that**
the torque (MF, MR) or the force is measured at a predetermined constant speed of movement of the axis (5) in the forward and reverse direction.

3. Method according to claim 1 or 2,
**characterised in that**
- the respective associated speed of movement in the forward and reverse direction is measured for the torque (MF, MR) and
- the energy-conserving moments (K2-K4, K8) and/or the friction-dependent moments (K1, K5-K7) are determined by computational overlaying of the torque values taking into account the computation associated acceleration-dependent inertial forces and speed-dependent frictional forces or
- that the corresponding energy-conserving and/or friction-dependent forces are determined by overlaying corresponding force values.

4. Method according to one of the previous claims,
**characterised in that**
the torque or force values are measured depending on the movement path (W) of the axis (5).

5. Method according to one of the previous claims,
**characterised in that**
the at least one computationally-determined characteristic value (K1-K8) is compared with a respective comparison value and that a warning message is output in the event of an impermissible deviation from the comparison value.

6. Method according to one of the previous claims,
**characterised in that**
a computationally determined, energy-conserving and direction-independent characteristic value (K2-K4, K8) is a moment offset (K2), a maximum conserving moment (K3), a minimum conserving moment (K4) or a moment trend (K8) of the elastic force, or is a force offset, a maximum conserving force, a minimum conserving force or a force trend of the elastic force.

7. Method according to one of the previous claims,
**characterised in that**
a computationally determined friction-dependent and direction-independent characteristic value (K1, K5-K7) is a mean frictional moment (K1), a maximum frictional moment (K5), a minimum frictional moment (K6) or a moment trend (K7) of the frictional force or is a mean frictional force, a maximum frictional force, a minimum frictional force or a force trend of the frictional force.

8. Method according to one of the previous claims,
**characterised in that**
the at least one characteristic value (K1-K8) is determined for a number of driven axes (5) of the machine (1).

9. Application of the method according to one of the claims 1 to 8 for monitoring the at least one characteristic value (K1-K8) of the at least one driven axis (5) of the machine (1) during commissioning and/or during setting and/or during the operation of the machine (1).

10. Use of the method according to one of the claims 1 to 8 in automation and manufacturing technology.

11. Measurement and evaluation unit for determining at least one characteristic value (K1-K8) of at least one driven, non-horizontal axis (5) of a machine (1), with the respective axis (5) of the machine (1) being driven by means of a rotating drive unit (2) and/or by means of a linear drive unit,
**characterised in that**
the measurement and evaluation unit are connected for signalling and/or data processing to a torque sensor (13) or to a force sensor for torque or force measurement of the respective axis (5) and with a linear encoder for movement detection of the movement path (W) of the respective axis (5), that the measurement and evaluation unit have means for measurement detection of the torque (MF, MR) or of the force of the respective axis (5) in the forward and reverse direction and means for computational determination of energy-conserving moments (K2-K4, K8) or forces on the one hand and/or friction-dependent moments (K1, K5-K7) or forces on the other hand as the at least one direction-independent characteristic value (K1-K8) by computational overlaying of associated torque or force values, with an energy-conserving moment (K2-K4, K8) being the moment which compensates for a weight and/or elastic force acting on the drive unit (2) by way of the axis (5) and/or that the energy-conserving force is the force which compensates for the weight and/or elastic force corresponding thereto which act on thereupon.

12. Measurement and evaluation unit according to claim 11,
**characterised in that**
the measurement and evaluation unit has means for detecting the torque or force values as a function of the movement path (W) of the respective axis (5).

13. Measurement and evaluation unit according to claim 12,
**characterised in that**
the measurement and evaluation unit has means for computing the movement speed of the respective axis (5) in the forward and reverse direction and that the measurement and evaluation unit has means for determining the energy-conserving moments (K2-K4, K8) and/or the friction-dependent moments (K1, K5-K7) by computational overlaying of associated torque values taking into account the computation associated acceleration-dependent inertial forces and speed-dependent frictional forces or that the measurement and evaluation unit has means for determining corresponding energy-conserving and/or friction-dependent forces by overlaying corresponding force values.

14. Measurement and evaluation unit according to one of the claims 11 to 13, **characterised in that**,
the measurement and evaluation unit has output means for output of the at least one computationally-determined characteristic value (K1-K8).

15. Measurement and evaluation unit according to one of the claims 11 to 14, **characterised in that**,
the measurement and evaluation unit has comparison means for computationally comparing the at least one determined characteristic value (K1-K8) with a respective comparison value and further output means for output of a respective warning message in the event of an impermissible deviation from the comparison value.

16. Measurement and evaluation unit according to one of the claims 11 to 15, **characterised in that**,
the computationally determinable, energy-conserving and direction-independent characteristic value (K2-K4, K8) is a moment offset (K2), a maximum conserving moment (K3), a minimum conserving moment (K4) or a moment trend (K8) of the elastic force, or is a force offset, a maximum conserving force, a minimum conserving force or a force trend of the elastic force.

17. Measurement and evaluation unit according to one of the claims 11 to 16, **characterised in that**,
the determinable friction-dependent and direction-independent characteristic value (K1, K5-K7) is a mean frictional moment (K1), a maximum frictional moment (K5), a minimum frictional moment (K6) or a moment trend (K7) of the frictional force or is a mean frictional force, a maximum frictional force, a minimum frictional force or a force trend of the frictional force.

18. Use of the measurement and evaluation unit (11) according to one of the claims 11 to 17 for monitoring the at least one characteristic value (K1-K8) of the respective driven non-horizontal axis (5) of the machine (1), especially a machine, tool, during commissioning and/or during setting and/or during the course of operation of the machine (1).

19. Control device for control and monitoring of a machine (1), especially for a machine tool, with the control device having a measurement and evaluation unit (11) according to one of the preceding claims 11 to 17.

20. Machine, especially a machine tool, with a control device (10) according to claim 19 and with at least one rotating drive (2) able to be controlled via the control device (10) and/or one linear drive unit for linear movement of a respective non-horizontal axis (5) of the machine (1).

21. Machine according to claim 20,
**characterised in that**
- that the at least one rotating drive unit (2) has a converter (3), an electric motor (4) and a spindle drive (6) for converting the rotational movement of the electric motor (4) into a linear travel movement of the respective axis (5),
- that the converter (3) of the respective drive unit (2) features a current sensor for detecting a motor current and
- that the control device (10) has means for computing the current torque (MF, MR) acting on the electric motor (4) from a current value detected by means of the current sensor.

22. Machine according to claim 20 or 21,
**characterised in that**
- the at least one linear drive unit has a converter (3) and a linear motor in each instance, which is set up to move the respective axis (5),
- that the converter (3) of the respective drive unit (2) features a current sensor for detecting a motor current and
- that the control device (10) has means for computing the current torque (MF, MR) acting on the electric motor (4) from a current value detected by means of the current sensor.

## Revendications

1. Procédé de détermination d'au moins une grandeur ( K1 à K8 ) caractéristique d'un axe, entraîné et non horizontal, d'une machine ( 1 ), l'axe ( 5 ) étant entraîné au moyen d'un groupe ( 2 ) d'entraînement tournant et/ou au moyen d'un groupe d'entraînement linéaire,
**caractérisé en ce que** l'on mesure, le long d'un trajet ( W ) de déplacement de l'axe ( 5 ), un couple ( MF, MR ) de rotation agissant sur le groupe ( 2 ) d'entraînement ou une force qui y correspond,
- on mesure le couple ( MF, MR ) de rotation ou la force dans la direction vers l'avant ou dans la direction vers l'arrière et
- **en ce que** l'on détermine, comme la au moins une grandeur ( K1 à K8 ) caractéristique indépendante du sens, des couples ( K2 à K4, K8 ) conservant de l'énergie ou des forces conservant de l'énergie d'une part et/ou des couples ( K1, K5 à K7 ) qui dépendent du frottement ou des forces qui dépendent du frottement d'autre part, en superposant par le calcul des valeurs de couple ou des valeurs de force associées, dans lequel un couple ( K2 à K4, K8 ) conservant de l'énergie est le couple qui compense un poids et/ou une force élastique agissant par l'intermédiaire de l'axe ( 5 ) sur le groupe ( 2 ) d'entraînement ou **en ce qu'**une force conservant de l'énergie est la force qui compense le poids agissant et/ou une force élastique correspondante agissante.

2. Procédé suivant la revendication 1,
**caractérisé**
**en ce que** l'on mesure le couple ( MF, MR ) de rotation ou la force pour une vitesse de déplacement constante donnée de l'axe ( 5 ) dans le sens vers l'avant ou dans le sens vers l'arrière.

3. Procédé suivant la revendication 1 ou 2,
**caractérisé**
- **en ce que** l'on mesure, dans le sens vers l'avant et dans le sens vers l'arrière, pour le couple ( MF, MR ) de rotation, la vitesse de déplacement respective associée,
- **en ce que** l'on détermine les couples ( K2 à K4, K8 ) conservant de l'énergie et/ou les couples ( K1, K5 à K7 ), qui dépendent du frottement, en superposant par le calcul les valeurs de couples de rotation en tenant compte dans le calcul de forces d'inertie associées, qui dépendent de l'accélération et/ou de forces de frottement, qui dépendent de la vitesse, ou
- **en ce que** l'on détermine les forces correspondantes conservant de l'énergie et/ou, qui dépendent du frottement par superposition de valeurs de force correspondantes.

4. Procédé suivant l'une des revendications précédentes,
**caractérisé**
**en ce que** l'on mesure les valeurs de couple de rotation de force en fonction du trajet ( W ) de déplacement de l'axe ( 5 ).

5. Procédé suivant l'une des revendications précédentes,
**caractérisé**
**en ce que** l'on compare la au moins une grandeur ( K1 à K8 ) caractéristique déterminée par le calcul à une valeur respective de comparaison et en ce que, dans le cas d'un écart inadmissible à la valeur de comparaison, on émet un message d'avertissement.

6. Procédé suivant l'une des revendications précédentes,
**caractérisé**
**en ce que** une grandeur ( K2 à K4, K8 ) caractéristique déterminée par le calcul, conservant de l'énergie et indépendante du sens est un décalage ( K2 ) de couple, un couple ( K3 ) maximum de conservation, un couple ( K4 ) minimum de conservation ou une tendance ( K8 ) de couple de la force élastique ou un décalage de force, une force maximum de conservation, une force minimum de conservation et une tendance de la force élastique.

7. Procédé suivant l'une des revendications précédentes,
**caractérisé**
**en ce qu'**une grandeur ( K1, K5 à K7 ) caractéristique déterminée par le calcul, qui dépend du frottement et qui dépend du sens, est un couple ( K1 ) moyen de frottement, un couple ( K5 ) maximum de frottement, un couple ( K6 ) minimum de frottement, une tendance ( K7 ) de couple de la force de frottement ou une force moyenne de frottement, une force maximum de frottement, une force minimum de frottement ou une tendance de la force de frottement.

8. Procédé suivant l'une des revendications précédentes,
**caractérisé**
**en ce que** l'on détermine la au moins une valeur ( K1 à K8 ) caractéristique pour plusieurs axes ( 5 ) entraînés de la machine ( 1 ).

9. Utilisation du procédé suivant l'une des revendications 1 à 8, pour le contrôle d'au moins une grandeur ( K1 à K8 ) caractéristique du au moins un axe ( 5 ) entraîné de la machine ( 1 ) lors de la mise en fonctionnement et/ou lors du réglage et/ou lors du fonctionnement courant de la machine ( 1 ).

10. Utilisation du procédé suivant l'une des revendications 1 à 8 dans la technique d'automatisation et de fabrication.

11. Unité de mesure et d'exploitation, qui est conçue pour la détermination d'au moins une grandeur ( K1 à K8 ) caractéristique d'au moins un axe ( 5 ) entraîné, qui n'est pas dirigé horizontalement, d'une machine ( 1 ), l'axe ( 5 ) respectif de la machine ( 1 ) étant entraîné au moyen d'un groupe ( 2 ) d'entraînement tournant et/ou au moyen d'un groupe d'entraînement linéaire,
**caractérisée**
**en ce que** l'unité de mesure et d'exploitation est reliée suivant la technique du signal et/ou suivant la technique des données à un capteur ( 13 ) de couple de rotation ou à un capteur de force, qui est conçu pour la mesure de couple de rotation et de force de l'axe ( 5 ) respectif, et à un indicateur de trajet, qui est conçu pour détecter le trajet ( W ) de déplacement de l'axe ( 5 ) respectif, en ce que l'unité de mesure et d'exploitation a des moyens, qui sont conçus pour la détection par la technique de mesure du couple ( MF, MR ) de rotation de la force de l'axe ( 5 ) respectif dans le sens allant vers l'avant et dans le sens allant vers l'arrière, et des moyens, qui sont conçus pour la détermination, comme la au moins une grandeur ( K1 à K8 ) caractéristique indépendante du sens, par le calcul de couples ( K2 à K4, K8 ) conservant l'énergie ou de forces, d'une part, et/ou de couples ( K1, K5 à K7 ), qui dépendent du frottement ou de forces, qui dépendent du frottement, d'autre part, en superposant par le calcul les valeurs associées de couple de rotation et de force, un couple ( K2 à K4, K8 ) conservant de l'énergie étant le couple qui compense un poids et/ou une force élastique agissant sur le groupe ( 2 ) d'entraînement par l'axe ( 5 ) ou en ce qu'une force conservant de l'énergie est la force qui compense le poids agissant et/ou une force élastique agissant de manière correspondante.

12. Unité de mesure et d'exploitation suivant la revendication 11,
**caractérisée**
**en ce que** l'unité de mesure et d'exploitation a des moyens, qui sont conçus pour la détection des valeurs de couple de rotation et de force en fonction du trajet ( W ) de déplacement de l'axe ( 5 ).

13. Unité de mesure et d'exploitation suivant la revendication 12,
**caractérisée**
**en ce que** l'unité de mesure et d'exploitation a des moyens, qui sont conçus pour le calcul de la force de déplacement de l'axe ( 5 ) respectif dans le sens allant vers l'avant et dans le sens allant vers l'arrière, et en ce que le dispositif de mesure et d'exploitation a des moyens, qui sont conçus pour la détermination des couples ( K2 à K4, K8 ) conservant de l'énergie et/ou des couples ( K1, K5 à K7 ), qui dépendent du frottement, en superposant par le calcul des valeurs associées de couple de rotation en tenant compte dans le calcul de forces d'inertie associées, qui dépendent de l'accélération, et de forces de frottement, qui dépendent de la vitesse, ou en ce que l'unité de mesure et d'exploitation a des moyens, qui sont conçus pour la détermination de forces correspondantes conservant de l'énergie et/ou dépendant du frottement en superposant des valeurs de force correspondantes.

14. Unité de mesure et d'exploitation suivant l'une des revendications 11 à 13,
**caractérisée**
**en ce que** l'unité de mesure et d'exploitation a des moyens d'émission, qui sont conçus pour l'émission de la au moins une grandeur ( K1 à K8 ) caractéristique déterminée par le calcul.

15. Unité de mesure et d'exploitation suivant l'une des revendications 11 à 14,
**caractérisée**
**en ce que** l'unité de mesure et d'exploitation a des moyens de comparaison, qui sont conçus pour la comparaison par le calcul de la au moins une grandeur ( K1 à K8 ) caractéristique déterminée à une valeur respective de comparaison et, en outre, des moyens d'émission, qui sont conçus pour émettre un message d'avertissement respectif dans le cas d'un écart inadmissible à la valeur de comparaison.

16. Unité de mesure et d'exploitation suivant l'une des revendications 11 à 15,
**caractérisée**
**en ce que** la grandeur ( K2 à K4, K8 ) caractéristique, qui peut être déterminée par le calcul, qui conserve de l'énergie et qui est indépendante du sens, est un décalage ( K2 ) de couple, un couple ( K3 ) maximum de conservation, un couple ( K4 ) minimum de conservation ou une tendance ( K8 ) du couple de la force élastique ou un décalage de force, d'une force maximum de conservation, une forme minimum de conservation ou une tendance de la force élastique.

17. Unité de mesure et d'exploitation suivant l'une des revendications 11 à 16,
**caractérisée**
**en ce que** la grandeur ( K1, K5 à K7 ), qui peut être déterminée, qui dépend du frottement et qui est indépendante du sens, est un couple ( K1 ) moyen de frottement, un couple ( K5 ) maximum de frottement, un couple ( K6 ) minimum de frottement, une tendance ( K7 ) de couple de la force de frottement ou une force moyenne de frottement, une force maximum de frottement, une force minimum de frottement ou une tendance de la force de frottement.

18. Utilisation de l'unité ( 11 ) de mesure et d'exploitation suivant l'une des revendications 11 à 17, pour le contrôle d'au moins une grandeur ( K1 à K8 ) caractéristique de l'axe ( 5 ) respectif entraîné et non dirigé horizontalement de la machine ( 1 ), notamment d'une machine-outil, lors de la mise en fonctionnement et/ou lors du réglage et/ou lors du fonctionnement courant de la machine ( 1 ).

19. Appareil de commande qui est conçu pour commander et contrôler une machine ( 1 ), notamment une machine-outil, dans lequel l'appareil de commande comporte une unité ( 11 ) de mesure et d'exploitation suivant l'une des revendications précédentes 11 à 17.

20. Machine, notamment machine-outil, comprenant un appareil ( 10 ) de commande suivant la revendication 19 et au moins un groupe ( 2 ) d'entraînement tournant pouvant être commandé par l'appareil ( 10 ) de commande et/ou un groupe d'entraînement linéaire pour le déplacement linéaire d'un axe ( 5 ) respectif dirigé non horizontalement de la machine ( 1 ).

21. Machine suivant la revendication 20,
**caractérisée**
- **en ce que** la au moins un groupe ( 2 ) d'entraînement tournant a respectivement un convertisseur ( 3 ), un moteur ( 4 ) électrique et un entraînement ( 6 ) par broche pour la transformation du mouvement de rotation du moteur ( 4 ) électrique en un mouvement de déplacement linéaire de l'axe ( 5 ) respectif,
- **en ce que** le convertisseur ( 3 ) du groupe ( 2 ) respectif d'entraînement comporte un capteur de courant pour la détection d'un courant de moteur et
- **en ce que** l'appareil ( 10 ) de commande comporte des moyens, qui sont conçus pour calculer le couple ( MF, MR ) de rotation instantané agissant sur le moteur ( 4 ) électrique à partir d'une valeur de courant détectée à l'aide du capteur de courant.

22. Machine suivant la revendication 20 ou 21,
**caractérisée**
- **en ce que** le au moins un groupe d'entraînement linéaire comporte respectivement un convertisseur ( 3 ) et un moteur linéaire, qui est conçu pour le déplacement de l'axe ( 5 ) respectif,
- **en ce que** le convertisseur ( 3 ) du groupe ( 2 ) d'entraînement respectif comporte un capteur de courant, qui est conçu pour la détection d'un courant d'un moteur linéaire et
- **en ce que** l'appareil ( 10 ) de commande comporte des moyens, qui sont conçus pour le calcul de la force agissant instantanément sur le moteur linéaire à partir d'une valeur de courant détectée au moyen du capteur de courant.
